# EUROPÄISCHE PATENTSCHRIFT

(11) **EP 1 704 766 B1**
(45) Veröffentlichungstag und Bekanntmachung des Hinweises auf die Patenterteilung: **24.12.2008**
(21) Anmeldenummer: 06005890.6
(22) Anmeldetag: 22.03.2006
(51) Int. Cl.: A01D 34/00, A01B 69/00

(54) **Verfahren zur Bodenflächenanalyse und Rasenpflege-Roboter zur Durchführung des Verfahrens**
Method for the analysis of soil surface and lawn treating robot for carrying out the method
Méthode d'analyse de la surface du sol et robot d'entretien du gazon pour l'application de la méthode

(30) Priorität: 23.03.2005 DE 102005013365
(43) Veröffentlichungstag der Anmeldung: 27.09.2006
(73) Patentinhaber: Wolf-Garten GmbH & Co. KG, 57518 Betzdorf (DE)
(72) Erfinder: Arnold, Gunter, 22045 Hamburg (DE)
(74) Vertreter: Koch, Günther

(56) Entgegenhaltungen:
- EP-A- 0 988 779
- WO-A-85/02267
- DE-A1- 4 413 739
- DE-A1- 19 932 552
- DE-C1- 19 507 957
- US-A- 5 222 324
- US-A- 5 621 460
- US-A1- 2003 023 356

## Beschreibung

Service-Roboter werden seit längerem auch im heimischen Bereich genutzt. Besonders Roboter zum Staubsaugen und Rasenmähen setzen sich immer weiter durch. Hauptproblem solcher autonomer mobiler Roboter ist die Implementation einer der Funktion angepassten Navigationseinrichtung.

Während Staubsaugerroboter durch die Begrenzung des Wohnbereiches mithilfe spezieller Sensoren zur Detektion von festen Eingrenzungen wie Wänden in ihrem Wirkgebiet gehalten werden, ist für Rasenpflege-Roboter das Problem der Begrenzung der Arbeitsfläche im Outdoorbereich noch nicht zufrieden stellend gelöst.

Bekannt sind Roboter zum Rasenmähen, die durch Induktionsschleifen auf ihrer Arbeitsfläche gehalten werden. Da die Installation von Induktionsschleifen um die zu mähende Rasenflächen mit erheblichem Arbeitsaufwand verbunden ist, gibt es einige Entwicklungen, die einen autonomen Einsatz von mobilen Robotern auch ohne Induktionsschleifen ermöglichen.

Da Bodenflächen mit Grasbewuchs einige charakteristische Eigenschaften aufweisen, liegt es nahe, sie für eine Rasenflächenindikation zu nutzen. Es gibt verschiedene Messvorrichtungen, die diese zumeist optischen Merkmale detektieren und über ein Verfahren zur Bodenoberflächenanalyse eine Rasenerkennung ermöglichen. Über sie wird dem Roboter eine definierte Arbeitsfläche vorgegeben, die von virtuellen Begrenzungen, wie Übergang zu Steinplatten, Beeten, Sand, Erde und dergl. umgeben ist. Die Rasenfläche umgibt eine für den Roboter detektierbare Begrenzung, wodurch der Rasen zur selbstständig erkannten Arbeitsfläche wird.

Ein großer Vorteil liegt darin, dass diese Roboter auch in Leih- oder Gartengemeinschaften nutzbar sind, da sie problemlos auf andere Rasenflächen verbracht werden können und sich ohne vorbereitende Maßnahmen selbstständig an neue Umgebungen anpassen. Weiterhin sind sie für einen großflächigen Einsatz in Golf- und Parkanlagen gut geeignet, wo der Einsatz von Induktionsschleifen und ähnlichen Hilfsmitteln nicht praktikabel ist.

Ein selbstfahrender Rasenmäher mit einer Messvorrichtung mit Kamera und Laserscanner geht aus der DE 103 27 223 A1 hervor. Nachteilig sind hier die hohen Kosten für die aufwändigen Sensoren und der Hardwareaufwand für die Datenverarbeitung. Auch erscheint der Einsatz eines offenen Lasers unter dem sicherheitstechnischen Aspekt in einem Consumer-Gerät problematisch.

Einen weiteren Lösungsweg, einen Roboter an sein Arbeitsfeld auf Rasenflächen zu binden, bietet die Analyse des Lichtspektrums im Nah-Infrarotbereich. Es wird das spezielle Lichtreflexionsverhalten ab 700 nm Wellenlänge genutzt. Oberhalb der durch das im Gras enthaltenen Chlorophylls verursachten charakteristischen Reflektanzkante, als Red Edge bezeichnet, zeigt sich ein besonders intensives Reflexionsverhalten.

Ein selbstfahrender Rasenmäher mit einer aktiven Infrarot-Messvorrichtung zur Analyse des vom Boden reflektierten IR-Lichtspektrums wird in der DE 199 32 552 C2 beschrieben. Bei dieser Ausführung wird auf kurze Distanz unterhalb des Rasenmähers vor dem Mähwerk der Messvorgang vorgenommen. Dieses Verfahren kann bei kritischen Rasenbegrenzungen, wie z.B. abfallende Kanten, Gartenteichumrandungen und dergl., wegen der geringen Reaktionszeit, bedingt durch Fahrgeschwindigkeit und dem Abstand Messfläche zu Vorderrad bzw. Mähwerk, zu gefährlichen Situationen führen. Durch den kurzen Abstand von Messfläche zu Mähwerk kann keine Differenzierung zwischen Rasenlücken und Rasenrand erfolgen. Der Mähroboter ist also nur auf gut gepflegtem Rasen einsetzbar.

Die Erfindung geht gemäß Oberbegriff des Patentanspruchs 1 von einem durch die DE-A-19 325 52 offenbarten Verfahren aus, bei dem die Bodenoberfläche im zu bearbeitenden Bereich durch die eigene Vorwärtsbewegung mittels IR-Diode und IR-Sensoren auf ihre Reflexion gescannt wird.

Der Erfindung liegt die Aufgabe zugrunde ein Verfahren und eine Vorrichtung zur Bodenoberflächenanalyse zu schaffen, bei denen die Vorteile der vorausschauenden Laser-Scan-Technik mit den Vorteilen der IR-Reflektanzmessung unter Verzicht auf Laserlichtquellen zusammengefaßt sind, wobei eine zuverlässige Beurteilung der Reflexionswerte gewährleistet ist.

Diese Aufgabe wird verfahrensmäßig gelöst durch die Merkmale des Kennzeichnungsteils des Anspruchs 1, sowie durch einen Rasenmäher-Roboter mit den kennzeichnenden Merkmalen des Anspruchs 7.

Durch die Benutzung des Distanzsensors werden Veränderungen des grundsätzlich vorgegebenen Abstandes der Messvorrichtung zum Boden festgestellt, um dadurch die ermittelten Reflexionswerte richtig beurteilen zu können. Hierdurch wird es auch möglich, den Boden relativ weit vor dem Rasenmäher abzutasten, weil selbst durch Kippbewegungen erzeugte relativ große Distanzänderungen durch die Erfindung kompensiert werden.

Ausgestaltungen des erfindungsgemäßen Verfahrens ergeben sich aus den Unteransprüchen 2 bis 6, und Ausgestaltungen des Rasenmäher-Roboters sind in den Ansprüchen 8 und 9 gekennzeichnet.

Die erfindungsgemäße Messvorrichtung ist in einem IR-Messkopf mit vorgesetzter Sende- und Empfangsoptik zusammengefaßt, bestehend aus Auswerteeinheit, wie Mikroprozessor oder dergl., IR-Fotodiode, IR-Fotoarray und einer IR-Sendediode. Der in Schräglage angeordnete Messkopf emittiert fokussiertes, moduliertes IR-Licht vorzugsweise ausgehend von der Oberseite des Roboters in einem Winkel von ca. 25 Grad zur Horizontalen in den Bereich der zu bearbeitenden Bodenfläche. Er projiziert eine Messfläche von ca. 2 cm Durchmesser auf die Rasen- bzw. Bodenoberfläche ca. 30 cm vor die Front des Roboters. Ein Teil des IR-Lichtes wird hier reflektiert und von der IR-Fododiode und dem IR-Fotoarray des Messkopfes detektiert. Unter Ausnutzung des speziellen IR-Lichtrefexionsverhaltens von der im Rasen enthaltenen Biomasse wird der Wert der Reflexionsintensität über die IR-Fotodiode gemessen. Durch Bodenwellen bzw. -senken oder unterschiedlichen Bewuchs, wie Höhe und Blattstellung der Rasengräser, variiert während der Vorwärtsbewegung des Roboters die Distanz zwischen Messfläche und Messkopf. Um die Reflektanz der von der Messfläche abgedeckten Oberfläche zu berechnen, muss die Entfernung zur Messvorrichtung hinreichend genau bekannt sein. Ein Distanzsensor, bestehend aus IR-Fotoarray und Auswerteeinheit ermittelt permanent nach dem Triangulationsverfahren die Entfernung zwischen Messkopf und Messfläche und fungiert gleichzeitig als Sensor zur Kollisionsgefahrerkennung. Die Auswerteeinheit des Messkopfes berechnet aus Entfernung und Reflexion einen Istwert, der den Reflexionsindizes der in ihr abgespeicherten Bodenoberflächen bzw. Obstruktionen zugeordnet wird. Um eine hinreichend hohe Auflösung zu gewährleisten, werden die Messflächen durch einen stark fokussierten IR-Lichtstrahl entsprechend klein ausgeleuchtet. Zur Vermeidung von Fremdlichteinwirkung sind IR-Filter und Lichtmodulation implementiert.

Die Erfindung beinhaltet weiter ein Verfahren zur Auswertung der Eigenschaften der Bodenoberfläche nach Reflektanz und Struktur. Da der kleine Ausschnitt der Messfläche auf der Bodenoberfläche keine eindeutige Aussage über die Bodenverhältnisse vor dem Roboter gewährleistet, wird der Boden in Fahrtrichtung durch die eigene Vorwärtsbewegung abgescannt. Von dieser Scan-Linie werden laufend Messwerte gebildet, aus denen 2-dimensionale Koordinaten, wie Höhe und Länge und die Reflektanz der Oberfläche ermittelt und Obstruktionen, wie feste Hindernisse, Erdlöcher, abfallende Kanten und dergl., klassifiziert wrden können. Diese Daten werden an die Steuerungseinheit der Fahrwegplanung weitergegeben. Durch den Abstand zwischen Roboterfront und Messfläche bleibt der Steuerungseinheit immer ein hinreichend großes Zeitfenster, um auf verschiedenste Umfeldbedingungen angemessen zu reagieren. So wird auch zwischen Rasenrand und Rasenlücke differenziert, um unnötige Ausweichmanöver zu vermeiden.

Für eine Bodenoberflächenanalyse sind mindestens 2 Scan-Linien erforderlich, erzeugt durch 2 Messköpfe, die vorzugsweise links und rechts oberhalb der Front des Roboters angeordnet sind und den Fahrweg vor den Spuren der Antriebsräder abtasten. Eine 3. Scan-Linie oder mehr, die sich dazwischen befinden können, generieren ein höher aufgelöstes räumliches Abbild des zu analysierenden Bereiches.

Ein zum Rasenmäher ausgestatteter Roboter kann durch die Daten der Auswerteeinheit eine Differenzierung zwischen bereits gemähtem und ungemähtem Rasen vornehmen. Werden 2 Scan-Linien miteinander verglichen, so kann die Steuerungseinheit der Fahrwegplanung Daten für eine exakte Fahrt an der Mähkante zuführen.

In einer weiteren Ausführung kann der Messkopf beweglich angebracht sein, so dass der IR-Lichtstrahl während der Fahrt mit einer bestimmten Frequenz derart verschwenkt wird, dass über eine definierte Breite die Bodenoberfläche vor dem Roboter ausgetastet wird und sich durch die eigene Fahrbewegung ein durchgehendes Abbild der Struktur und Reflektanz des abgescannten Bereiches ergibt. Auf diese Weise wird mindestens ein Messkopf eingespart, wogegen jedoch ein hoher Aufwand für die Führungsmechanik steht.

Typischerweise werden Rasenmähroboter, die ihre Energie aus einer wiederaufladbaren Batterie beziehen, mit hoher Schnittfrequenz eingesetzt. Sie sind zumeist als Mulchmäher konzipiert und daher für hohen Graswuchs nur bedingt geeignet. Gelegentlich ist es aber nötig, sie auch bei hohem Grasstand des Rasens, beispielsweise nach der Urlaubszeit oder nach einer Schlechtwetterperiode, zu nutzen. Für einen autonomen Betrieb muss das vorausschauende Sensorsystem zwischen tiefliegendem Blattwerk von Büschen oder Sträuchern und hohem Graswuchs unterscheiden können. Durch das Verhältnis der detektierten Reflexionsintensität zu der gemessenen Distanz, definitionsgemäß der Reflektanz, werden beispielsweise blattlose Äste als Hindernis klassifiziert. Hingegen werden tiefliegendes Blattwerk von Büschen und Sträuchern genauso wie hohes Gras durch ihre ähnlichen Reflexionseigenschaften zunächst nicht als Obstruktion wahrgenommen. Um eine nötige Differenzierung vorzunehmen, wird während der Mähfahrt hohes Gras durch die vor den Messmodulen angeordnete Fronthaube des Roboters nach vorne gebeugt. So wird eine Abdeckung der Messköpfe vermieden und ein unnötiges Ausweichmanöver verhindert. Bei Büschen und Sträuchern hingegen, die auf Rasenflächen wachsen und deren Blätter grasähnliche Reflexionseigenschaften aufweisen, taucht die Fronthaube des Roboters einige Zentimeter in das Blattwerk ein. Dieses wird durch die Distanzsensoren der Messköpfe registriert und eine Ausweichreaktion ausgelöst. Blumen, Büsche und Sträucher, die sich auf Beeten befinden, werden nicht tangiert, da die Reflexionseigenschaften der Beetoberflächen bereits im Vorwege Ausweichreaktionen auslösen.

Durch den Vergleich der gemessenen und errechneten Daten mit den abgespeicherten Reflexionsindizes wird der Blattflächenindex, definiert als Blatt - pro Bodenfläche, ermittelt. Über den Blattflächenindex kann eine Rasenzustandsanalyse im Zusammenhang mit einer automatischen Kartografierung der Rasenfläche mithilfe von GPS oder Erdmagnetfeldsensoren innerhalb der Steuerungseinheit oder über eine Funkverbindung zum heimischen PC mit entsprechendem Computerprogramm Karten der Rasenfläche erstellt und bewertet werden. Es können Düngebedarfsermittlungen durchgeführt werden. Ein Roboter kann mit einer entsprechenden Vorrichtung ausgestattet auch als autonom navigierendes Fahrzeug zur gezielten Saatgut- oder Düngemittelausbringung eingesetzt werden. Da die Sensoren permanent während der Überfahrt messen, wird die eingesetzte Menge auch ständig an den tatsächlichen Bedarf der gerade überfahrenen Teilfläche angepasst.

Anhand der Zeichnungen wird die Erfindung an einem Ausführungsbeispiel integriert in einem Roboter zum Rasenmähen erläutert.

Ein in den Figuren (1 und 2) dargestellter Rasenmähroboter weist an der Vorderseite oberhalb der Fronthaube (10) 2 IR-Messköpfe (1) auf, die auf dem Fahrweg 2 Scan-Linien (2) vor den 2 Antriebsrädern (3) durch 2 IR-Lichtstrahlen (4) 2 Messflächen (5) mit einem Abstand von ca. 30-40 cm vor der Front des Rasenmähroboters mit einem Durchmesser von ca. 2 cm auf die Rasen- bzw. Bodenoberfläche projizieren.

Die IR-Messköpfe (1), bestehend aus IR-Fotodiode (6), IR-Fotosendediode (7) und IR-Fotoarray (8), sind in ca. 20 cm Höhe auf der Fronthaube ca. 10 cm zurückgesetzt schräg angeordnet, so dass sie einen Strahlungswinkel zur Horizontalen von ca. 25 Grad bilden.

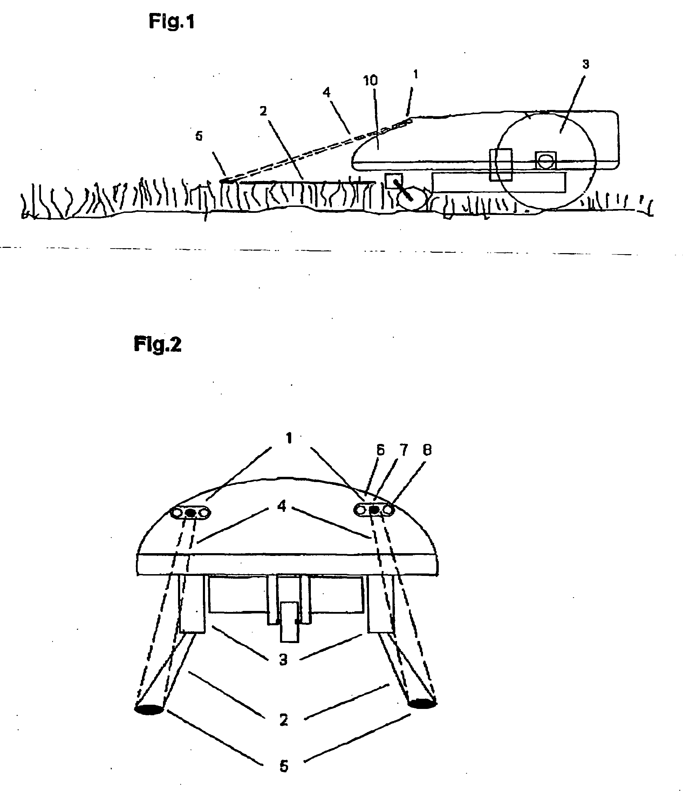

## Patentansprüche

1. Verfahren zur Bodenoberflächenanalyse für Rasenmäher-Roboter bei dem die Bodenoberfläche im zu bearbeitenden Bereich durch die eigene Vorwärtsbewegung einer mit IR-Diode und IR-Sensor ausgerüsteten Messvorrichtung auf ihre Reflektanz gescannt wird, um eine Bodenoberflächenanlayse durchzuführen und um dem Rasenmäher-Roboter eine definierte Arbeitsfläche vorzugeben, **dadurch gekennzeichnet, dass** durch einen Distanzsensor Abweichungen von einem vorgegebenen Sollabstand der Messvorrichtung zum Boden festgestellt werden und dass der Reflektanzwert entsprechend dem Ist-Abstand korrigiert wird.

2. Verfahren nach Anspruch 1, **dadurch gekennzeichnet, dass** für die Bodenoberflächenanalyse wenigstens zwei Scan-Linien vorgesehen werden, die den Fahrweg vor den Spuren der Antriebsräder abtasten.

3. Verfahren nach Anspruch 1, **dadurch gekennzeichnet, dass** für die Bodenoberflächenanalyse die Messvorrichtung derart beweglich gelagert wird, dass der IR-Lichtstrahl während der Fahrt so verschwenkt wird, dass über eine definierte Breite die Bodenoberfläche von dem Rasenmäher-Roboter abgetastet wird.

4. Verfahren nach einem der vorhergehenden Ansprüche, **dadurch gekennzeichnet, dass** die Messvorrichtung von der Oberseite des Rasenmäher-Roboters nach vorn auf die Bodenfläche gerichtet ist und neben der Rasenanalyse eine Kollisionsgefahrerkennung bewirkt.

5. Verfahren nach Anspruch 4, **dadurch gekennzeichnet, dass** die Messstrahlen unter einem Winkel von 10 bis 80 Grad, vorzugsweise einen Winkel von 25 Grad nach vorn unten gerichtet sind.

6. Verfahren nach Anspruch 2, **dadurch gekennzeichnet, dass** durch entsprechend unterschiedliche Reflektanzwerte zwischen gemähten und ungemähtem Rasen unterschieden wird, wodurch eine exakte Fahrt entlang der Mähkante bewirkt wird.

7. Rasenmäher-Roboter zur Durchführung des Verfahrens nach einem der Ansprüche 1 bis 6, **dadurch gekennzeichnet, dass** er mit einer Messvorrichtung (1) zur Distanzmessung ausgerüstet ist, deren Messstrahlen (4) schräg nach vorn unten gerichtet sind.

8. Rasenmäher-Roboter nach Anspruch 7, **dadurch gekennzeichnet, dass** je eine Messvorrichtung (1) ihre Messstrahlen (4) vor die beiden Laufräder richtet

9. Rasenmäher-Roboter nach Anspruch 7, **dadurch gekennzeichnet, dass** eine Messvorrichtung (1) schwenkbar derart gelagert ist, dass die das Vorfeld in einer vorbestimmten Breite abtastet.

## Claims

1. A method of ground surface analysis for lawn mowing robots in which the ground surface in the region to be worked on is scanned in respect of its reflectance by the forward movement of a measuring device itself, which is equipped with an IR diode and an IR sensor in order to perform a ground surface analysis operation and to predetermine a defined working area for the lawn mowing robot, **characterised in that** deviations from a predetermined reference spacing of the measuring device relative to the ground are detected by a distance sensor and the reflectance value is corrected in accordance with the actual spacing.

2. A method according to claim 1 **characterised in that** there are provided at least two scan lines for the ground surface analysis operation, the scan lines scanning the path of travel in front of the tracks of the drive wheels.

3. A method according to claim 1 **characterised in that** for the ground surface analysis operation the measuring device is supported movably in such a way that the IR light beam is pivoted during the travel movement in such a way that the ground surface is scanned by the lawn mowing robot over a defined width.

4. A method according to one of the preceding claims **characterised in that** the measuring device is directed from the top side of the lawn mowing robot forwardly on to the ground surface and besides lawn analysis implements collision risk detection.

5. A method according to claim 4 **characterised in that** the measuring beams are directed forwardly and downwardly at an angle of 10 to 80 degrees, preferably an angle of 25 degrees.

6. A method according to claim 2 **characterised in that** a distinction is made between mown and unmown lawn by suitably different reflectance values, whereby precise travel along the mowing edge is effected.

7. A lawn mowing robot for carrying out the method according to one of claims 1 to 6 **characterised in that** it is equipped with a measuring device (1) for distance measurement, the measuring beams (4) of which are directed inclinedly forwardly and downwardly.

8. A lawn mowing robot according to claim 7 **characterised in that** a respective measuring device (1) directs its measuring beams (4) in frontof the two runnerwheels.

9. A lawn mowing robot according to claim 7 **characterised in that** a measuring device (1) is pivotably supported in such a way that it scans the area in front over a predetermined width.

## Revendications

1. Procédé d'analyse de la surface du sol pour des robots tondeurs de pelouses, selon lequel la réflectance de la surface du sol dans la zone à traiter est scannée par le propre avancement d'un dispositif de mesure équipé d'une diode infrarouge et d'un capteur infrarouge, afin d'effectuer une analyse de la surface du sol et afin de prescrire au robot tondeur de pelouse une surface de travail définie, **caractérisé en ce qu'**un capteur de distance détermine des écarts par rapport à une distance de consigne prédéfinie entre le dispositif de mesure et le sol, et **en ce que** la valeur de réflectance est corrigée en fonction de la distance réelle.

2. Procédé selon la revendication 1, **caractérisé en ce qu'**il est prévu pour l'analyse de la surface du sol au moins deux raies de scannage qui balayent la trajectoire de déplacement devant les voies de passage des roues motrices.

3. Procédé selon la revendication 1, **caractérisé en ce que**, pour l'analyse de la surface du sol, le dispositif de mesure est monté à déplacement de telle sorte que le rayon de lumière infrarouge est, pendant la marche, pivoté de telle sorte que la surface du sol est balayée par le robot tondeur de pelouse sur une largeur définie.

4. Procédé selon l'une des revendications précédentes, **caractérisé en ce que** le dispositif de mesure est dirigé depuis la face supérieure du robot tondeur de pelouse vers l'avant sur la surface du sol, et réalise en plus de l'analyse de la pelouse une reconnaissance des risques de collisions.

5. Procédé selon la revendication 4, **caractérisé en ce que** les rayons de mesure sont dirigés vers l'avant et le bas sous un angle de 10 à 80 degrés, de préférence sous un angle de 25 degrés.

6. Procédé selon la revendication 2, **caractérisé en ce que** la distinction entre une pelouse tondue et une pelouse non tondue s'effectue par des valeurs de réflectance différentes correspondantes, produisant ainsi un déplacement précis le long de la ligne de tonte.

7. Robot tondeur de pelouse pour la mise en oeuvre du procédé selon l'une des revendications 1 à 6, **caractérisé en ce qu'**il est équipé d'un dispositif de mesure (1) pour la mesure de distance, dont les rayons de mesure (4) sont dirigés en oblique vers l'avant et le bas.

8. Robot tondeur de pelouse selon la revendication 7, **caractérisé en ce qu'**un dispositif de mesure (1) dirige ses rayons de mesure (4) devant les deux roues motrices.

9. Robot tondeur de pelouse selon la revendication 7, **caractérisé en ce qu'**un dispositif de mesure (1) est monté à pivotement de telle sorte qu'il balaye sur une largeur prédéterminée la zone située en avant.
